# EUROPEAN PATENT APPLICATION

(11) **EP 3 677 986 A1**
(43) Date of publication of application: **08.07.2020**
(21) Application number: 19217399.5
(22) Date of filing: 18.12.2019
(51) Int. Cl.: G06F 1/16, G02F 1/133, G02F 1/1335, H04M 1/02

(54) **MOBILE TERMINAL AND DISPLAY MODULE**

(30) Priority: 04.01.2019 CN 201910008047
(71) Applicant: Beijing Xiaomi Mobile Software Co., Ltd., Beijing 100085 (CN)
(72) Inventor: BIAN, Qingfang, Beijing, 100085 (CN)
(74) Representative: Jeffrey, Philip Michael

(57) **Abstract**

The present disclosure relates to a mobile terminal and display module, belongs to technical field of electronic devices. The mobile terminal includes a middle frame 1, a display screen disposed on front side of the middle frame 1, and a front panel 2 disposed on the middle frame. The display screen includes a display area 210 and a non-display area 220. The non-display area 220 includes a first edge region 221 adjacent to a first edge of the display area which formed with a notch 230, and the depth of the notch is smaller than the width of the first edge region. The middle frame 1 includes a first frame 11 adjacent to the first edge region 221 which is provided with the front panel 2 which is embedded in the notch in a direction perpendicular to the first edge and parallel to the front side of the middle frame 1.

## Description

### TECHNICAL FIELD

The present disclosure belongs to the technical field of electronic devices, and relates to a mobile terminal and a display module.

### BACKGROUND

In recent years, with the development of the economy, the electronic products such as mobile phones and tablet computers have been widely used. As an external input device, the touch screen can realize an input function by touching the display module with a finger or an electronic pen, which can make the human-computer interaction more direct, has the advantages of simplicity, quickness and user friendliness, and is applied more and more widely.

### SUMMARY

According to a first aspect of the present invention, there is provided a mobile terminal, the mobile terminal includes: a middle frame, a display screen disposed on a front side of the middle frame, and a front panel disposed on the middle frame.

The display screen includes a display area and a non-display area, the display area is provided with a plurality of display units arranged in an array, and the non-display area surrounds the display area.

The non-display area includes a first edge region adjacent to a first edge of the display area, the first edge region is formed with a notch, and the depth of the notch is smaller than the width of the first edge region.

The middle frame includes a first frame adjacent to the first edge region, the first frame is provided with the front panel component, and the front panel is fully or partially embedded in the notch in a direction perpendicular to the first edge and parallel to the front side of the middle frame.

Optionally, there are one or more notches, and at least one front panel component is embedded in each of the notches.

Optionally, there is one notch, and at least two front panel components are embedded in the notch.

Optionally, there are n notches and n front panel components, and n is an integer greater than 1; and one front panel component is embedded in each of the notches.

Optionally, the number of the notches is less than the number of the front panel components; and at least one front panel component is embedded in each of the notches.

Optionally, the notch is a semi-open notch.

Optionally, the notch is a rectangular notch or an arcuate notch.

Optionally, the middle frame is provided with a groove matching with the notch, and the notch and the groove enclose to form an accommodating space in which the front panel component may be embedded.

Optionally the front panel component includes at least one of a camera component, a speaker component, a microphone component, a distance sensor, a signal light component, an infrared sensor, a structured light sensor, an ambient light sensor, and a fingerprint recognition component.

According to a second aspect of the present invention, there is provided a display module.

The display module includes a display area and a non-display area, the display area is provided with a plurality of display units arranged in an array, and the non-display area surrounds the display area.

The non-display area includes a first edge region adjacent to a first edge of the display area, the first edge region is formed with a notch, and the depth of the notch is smaller than the width of the first edge region.

Optionally, there are one or more notches.

Optionally, the notch is a rectangular notch or an arcuate notch.

Optionally, the notch is located in the center of the first edge region.

The technical solution provided by the embodiments of the present disclosure may include the following beneficial effects.

With respect to this solution, the notches are provided in the non-display area outside the display area according to the position and the number of the sensors and the cameras, and the sensors and the cameras are disposed in the notches, solving the problem that the excessively large distance between the display area and the device frame caused by the non-display area is alleviated without affecting the display effect.

It is to be understood that both the foregoing general description and the following detailed description are exemplary and explanatory only and are intended to limit the present disclosure.

### DETAILED DESCRIPTION

In order to describe the technical solution in the embodiments of the present disclosure more clearly, the following briefly introduces the accompanying drawings required for describing the embodiments. Apparently, the accompanying drawings in the following description show merely some embodiments of the present disclosure.
FIG. 1 is a schematic structural diagram of a related device using a special-shaped screen;
FIG. 2 is a schematic structural diagram of a display module according to an exemplary embodiment of the present disclosure;
FIG. 3 is a schematic structural diagram of a mobile terminal according to an exemplary embodiment of the present disclosure;
FIG. 4 is a schematic structural diagram of a first notch according to an exemplary embodiment of the present disclosure;
FIG. 5 is a schematic structural diagram of a second notch according to an exemplary embodiment of the present disclosure;
FIG. 6 is a schematic structural diagram of a third notch according to an exemplary embodiment of the present disclosure;
FIG. 7 is a schematic structural diagram of a fourth notch according to an exemplary embodiment of the present disclosure; and
FIG. 8 is a schematic front diagram of the mobile terminal with a front glass cover plate added according to an exemplary embodiment of the present disclosure.

In the figures:
120-middle frame, 140-display screen, 141-first edge, 142-second edge, 143-third edge, 144-fourth edge, 145-notch, 145a-structured light sensor, 145b-speaker component, 145c-front-facing camera;
210-display area, 220-non-display area, 221-first edge region, 222-second edge region, 223 third edge region, 224-fourth edge region, 230-notch, 231-first notch, 232-second notch;
1-middle frame, 2-front panel component, 201-first component, 202-second component, 203-third component, 204-fourth component, 3-groove, 4- glass cover plate, 11-first frame.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the disclosure as recited in the appended claims.

The present disclosure provides a mobile terminal and a display module, which can solve the problem in the related art that, a special-shaped screen is used in order to improve the screen-to-body ratio, which results in that the image displayed is incomplete and has a large gap from the real full screen, thereby seriously affecting the user's perception experience. The technical solution is as follows.

It shall be understood that, although the terms "first" and "second" etc. may be used herein t o describe various elements, these elements should not be limited by these terms. These terms are o nly used to distinguish one element from another. For example, a first element could be termed a se cond element, and similarly, a second element could be termed a first element, without departing fro m the scope of example embodiments. As used herein, the term "and/or" includes any and all combi nations of one or more of the associated listed terms.

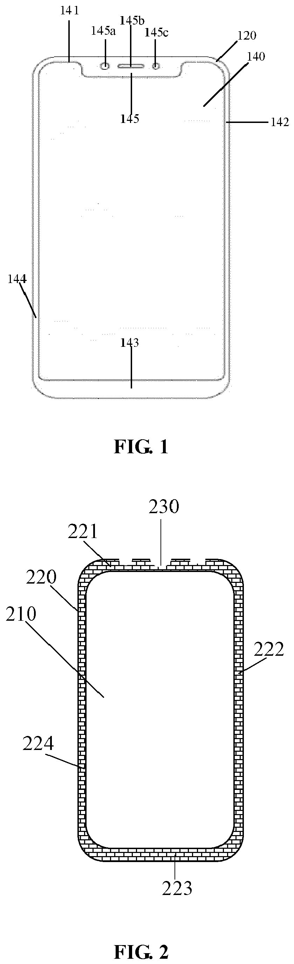

FIG. 1 shows a structural block diagram of a mobile terminal according to the related art. The mobile terminal includes a middle frame 120, a display screen 140 disposed on a front side of the middle frame 120, and a front panel disposed on the middle frame 120.

The display screen 140 has a rectangular shape, and the display screen 140 includes a first edge 141, a second edge 142, a third edge 143, and a fourth edge 144 that are sequentially connected. The first edge 141 is formed with a notch 145 having a rounded rectangular shape, and the notch 145 occupies a portion of the display area of the display screen 140.

The notch 145 is configured to accommodate various front panels, and the front panel includes at least one of a camera component, a speaker component, a microphone component, a distance sensor, a signal light component, an infrared sensor, a structured light sensor, an ambient light sensor, and a fingerprint recognition component. In an illustrative example, the notch 145 is provided with a structured light sensor 145a, a speaker component 145b, and a front-facing camera 145c.

Since the notch 145 occupies a portion of the display area of the display screen 140, the display area of the display screen 140 is not a regular rectangle or rounded rectangle in the display state, having a black area in the frontal region, that is, the so-called special-shaped screen in the industry, commonly known as "a mobile phone with a notch screen".

Although the structural shape of the special-shaped screen improves the screen-to-body ratio, the image displayed by the special-shaped screen is incomplete and has a large gap from the real full screen, thereby seriously affecting the user's perception experience.

The inventor has found that the display module includes a display area and a non-display area, and the above special-shaped screen excavates the display area in the display module, which results in the display area being not regular. Therefore, the inventor has provided a technical solution to dig holes in the non-display area, which not only can enlarge the screen-to-body ratio, but also ensure the regularity of the display area.

FIG. 2 shows a schematic structural diagram of a display module according to an exemplary embodiment of the present disclosure. The display module may have a rectangular structure.

The display module includes a display area 210 and a non-display area 220, the display area 210 is provided with a plurality of display units arranged in an array, and the non-display area 220 surrounds the display area. The display units can be monochrome or color pixel points.

The non-display area 220 includes a first edge region 221 adjacent to a first edge of the display area 210, a second edge region 222, a third edge region 223, and a fourth edge region 224. The second edge region 222, the third edge region 223, and the fourth edge region 224 are sequentially connected around the outer edge of the display area 210.

The first edge region 221 is formed with a notch 230. The depth of the notch 230 is smaller than the width of the first edge region 221, that is, the notch 230 is provided only on the first edge 221, and does not occupy or affect the display area 210. Illustratively, the width of each of the first edge region 221, the second edge region 222, the third edge region 223, and the fourth edge region 224 is about 1.1 mm, and the depth of the opening can be set to 0.4 mm to 0.6 mm.

At least one front panel can be disposed within the notch 230, the front panel includes, but is not limited to, at least one of a camera component, a speaker component, a microphone component, a distance sensor, a signal light component, an infrared sensor, a structured light sensor, an ambient light sensor, and a fingerprint recognition component.

If the first edge region 221 is used as the upper edge of the display module, the front panel disposed in the notch 230 can be at least one of a camera component, a speaker component, a distance sensor, a structured light sensor, and an ambient light sensor.

If the first edge region 221 is used as the upper edge of the display module, the third edge region 223 is generally provided with a flexible printed circuit (FPC), also called a cable; the cable is connected with a display driving chip after being bent. Illustratively, the display module can be rounded rectangular or right-angled rectangular, and the resolution of the screen can be 720p (720*1280), 1080p (1080*1920), 2k (2560*1440), 4k or 8k.

Alternatively, the number of the notch 230 is one or more.

The notch 230 may also be provided on any one or more of the second edge region 222, the third edge region 223, and the fourth edge region 224. In an alternative embodiment, the first edge region 221 is provided with a notch to accommodate a speaker component at the upper end of the terminal; and the third edge region 223 is also provided with a notch to accommodate a camera component disposed at the bottom of the terminal.

Alternatively, the notch 230 is a rectangular notch or an arcuate notch. The notch 230 can be set to be a rectangular notch or an arcuate notch having the same structural shape as that of the outer casing of the front panel 2, or the shape of the notch 230 may not be set according to the external structure of the front panel 2, but all are set to have a uniform general shape. For example, the notch can be set to have a rounded rectangle, as long as the front panel can be fully or partially embedded in the notch in a direction parallel to the front panel surface of the display module.

Alternatively, the notch 230 is located at the center of the first edge region 221, and the front panels such as a camera, an earpiece are disposed within the notch.

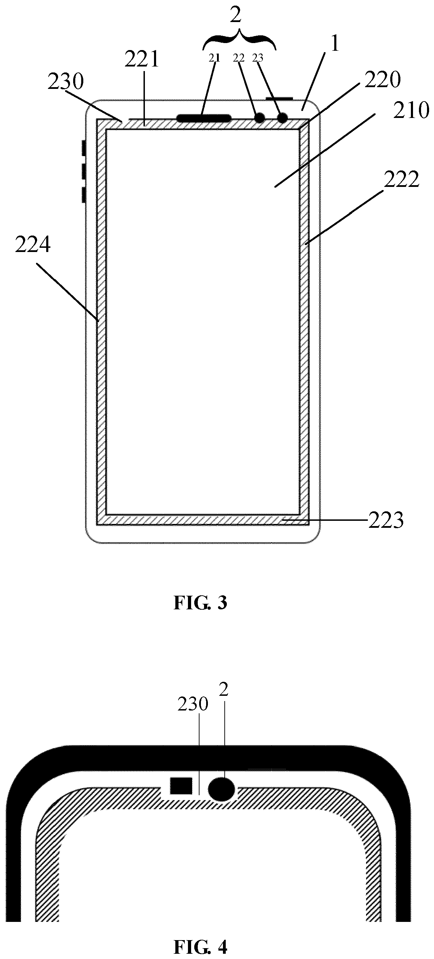

The present disclosure also discloses a mobile terminal using the above display module. FIG. 3 shows a schematic structural diagram of a mobile terminal according to an exemplary embodiment of the present disclosure. The schematic diagram is a top view with a front panel (also referred to as a glass cover plate) removed. The mobile terminal includes a middle frame 1, a display screen disposed on a front side of the middle frame 1, and a front panel 2 disposed on the middle frame.

The display screen includes a display area 210 and a non-display area 220, the display area 210 is provided with a plurality of display units arranged in an array, and the non-display area 220 surrounds the display area 210.

The non-display area 220 includes a first edge region 221 adjacent to a first edge of the display area 210, and a second edge region 222, a third edge region 223, and a fourth edge region 224. The second edge region 222, the third edge region 223, and the fourth edge region 224 are sequentially connected around the outer edge of the display area 210. The first edge region 221 is formed with a notch 230, and the depth of the notch 230 is smaller than the width of the first edge region 221, and thus the notch 230 does not occupy and affect the display area 210.

The middle frame 1 includes a first frame 11 adjacent to the first edge region 221, and the first frame 11 is provided with the front panel 2, the front panel 2 is fully or partially embedded in the notch 230 in a direction perpendicular to the first edge and parallel to the front side of the middle frame 1.

The front panel 2 includes at least one of a camera component, a speaker component, a microphone component, a distance sensor, a signal light component, an infrared sensor, a structured light sensor, an ambient light sensor, and a fingerprint recognition component. In an illustrative embodiment, the notch 230 on the first edge region 221 is provided with a front-facing camera component, and the front-facing camera component is located external to the display area 210 and does not occupy the display area 210.

Illustratively, the plurality of front panels shown in FIG. 3 is in a state after being embedded in the notch. The shape of the notch 230 can be an arcuate shape or a rectangular shape. The shape of the notch 230 is determined according to the shape, position and number of the front panel 2. Illustratively, the front panel 2 includes a first component 201, a second component 202, and a third component 203. The shape of the first component 201 is an elongated rounded rectangular shape, and thus a rounded rectangular notch matching with the shape of the camera module is provided on the first edge region 221 by means of cutting or grinding, so that the first component 201 is fully or partially embedded in the notch 230 in a direction parallel to the front panel surface. If the front panel 2 is a sensor of other shape, a notch having the same or similar shape as that of the sensor is provided.

Alternatively, the number of the notches 230 can be one or more, and each of the notches 230 is embedded with at least one front panel 2.

Illustratively, only one front panel 2 can be disposed in the notch 230, or the notch 230 can be appropriately enlarged to accommodate more than one front panel 2; or one or more notches 230 may only accommodate one front panel 2, the remaining notches accommodate more than one front panel 2.

Alternatively, the number of the notches 230 is one, and at least two front panels are embedded within the notch 230;

FIG. 4 shows a schematic structural diagram of a notch according to an exemplary embodiment of the present disclosure. Only one notch 230 is provided on the first edge region 221, and two front panels 2 are disposed in the notch 230.

Alternatively, the shape of the notch 230 is a rectangular, circular or elliptical shape.

In a possible embodiment, the shape of the notch 230 can be set to be the same as the external structure of the front panel 2. For example, if the front panel 2 has a rectangular structure, the cavity formed in the notch 230 is formed with a rectangular mounting structure (such as a rectangular mounting groove) matching with the shape of the front panel 2. If the front panel 2 is circular or elliptical, the corresponding position in the notch 230 is set to have an arcuate shape matching with the shape of the front panel 2.

In another possible embodiment, the number of the front panels 2 within the notch 230 may also be more, such as three or four. The shape of the notch 230 may also be set to be a different shape from the external structure of the front panel 2, as long as the notch 230 can accommodate the front panel 2. For example, the notch 230 is set to be a rectangular long opening, and a plurality of front panels 2 is disposed in the notch 230.

Alternatively, the number of the notch 230 and the number of the front panel are both n, and n is an integer greater than 1; and one front panel is disposed in each of the notches 230.

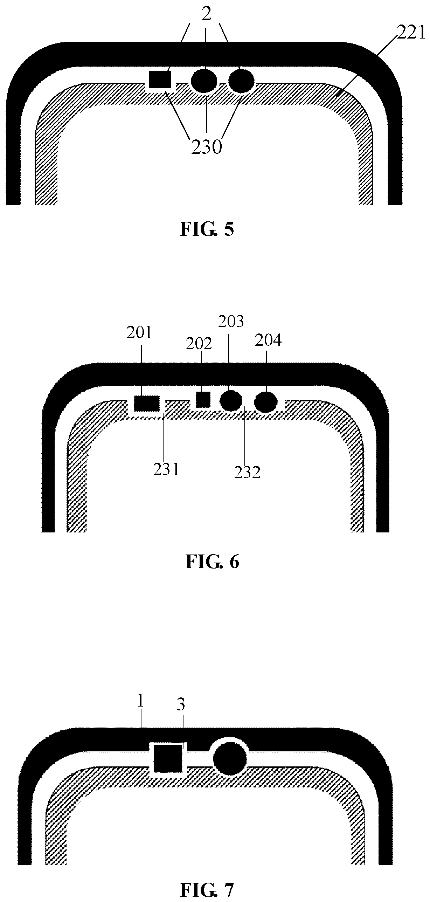

FIG. 5 shows a schematic structural diagram of another notch according to an exemplary embodiment of the present disclosure. The first frame 11 is provided with three front panels 2, and three notches correspondingly matching with the front panels 2 are disposed on the first edge region 221, and the three front panels 2 are respectively disposed in the three notches.

Alternatively, the shape of the notch 230 is rectangular, circular or elliptical shape.

In one possible embodiment, the shape and size of each of the notches 230 are determined according to the shape and size of the front panel 2 correspondingly disposed in the notch. For example, the external structural shape of the front panel 2 is rectangular, and thus the shape of the notch 230 is also set to be a rectangular shape matching with that of the front panel component. If the structural shape of the front panel 2 is a circular or elliptical shape, the shape of the notch 230 is also set to be an arcuate shape matching with that of the front panel 2. The shape of each of the notches 230 is determined according to the corresponding front panel 2, respectively.

In another possible embodiment, the shape of the notch may not be set according to the appearance structure of the front panel component. For example, the notch can be uniformly set to be rectangular or arcuate as long as the front panel can be accommodated therein. If the number of the front panels is more such as two or four, a plurality of notches are accordingly provided according to the above method.

Alternatively, the number of the notches is less than the number of the front panels, and each of the notches is embedded with at least one front panel.

FIG. 6 shows a schematic structural diagram of yet another notch according to an exemplary embodiment of the present disclosure. The first frame 11 is provided with four front panels, which are respectively a first component 201, a second component 202, a third component 203, and a fourth component 204. The first edge region is provided with two notches, which are respectively a first notch 231 and a second notch 232. The second component 202, the third component 203, and the fourth component 204 are positioned relatively close, and thus are all disposed within the second notch 232; the first component 201 is relatively far away from the other three components, and thus the first component 201 is separately disposed within the first notch 231.

The shape of the first notch 231 can be a rectangular or arcuate shape. The shape of the second notch 232 can be set to be matched with the shape of the fourth component, or the notch can be set to be a relatively large general-purpose notch, which can accommodate the components having different shapes.

Alternatively, the notch is a semi-open notch.

That is, one end of the notch is the inner edge of the first edge region, and the other end thereof on the outer side is an opening structure.

Alternatively, the middle frame is provided with a groove matching with the notch, and the notch and the groove enclose to form an accommodating space in which front panel can be embedded.

FIG. 7 shows a schematic structural diagram of still another notch according to an exemplary embodiment of the present disclosure. The shape of the grooves 3 on the middle frame 1 can be matched one-to-one with the shape of the notches. For example, each of the notches is provided with one front panel component. The middle frame is provided with a plurality of grooves 3 in one-to-one correspondence with the notches, and each of the grooves and one notch enclose to form an accommodating space for accommodating one front panel 2.

In another possible embodiment, the shape of the groove is not completely matched with the shape of the notch, and is matched one-to-one with the shape of the front panel component. For example, if one notch is provided with two front panels, two grooves are disposed on the middle frame, and each of the grooves is matched with one front panel component, respectively.

Alternatively, the front panel may include one or more of a camera component, a speaker component, a microphone component, a distance sensor, a signal light component, an infrared sensor, a structured light sensor, an ambient light sensor, and a fingerprint recognition component. The front panels to which the present disclosure is directed are not limited to the front panels described above, and the types and number of the sensors can be increased or decreased depending on the functions of the device.

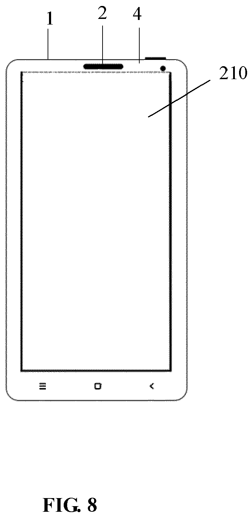

FIG. 8 shows a schematic diagram of the external structure of the mobile terminal according to an exemplary embodiment of the present disclosure. This figure is a front top view of any of the above embodiments with a glass cover plate added. The mobile terminal includes a middle frame 1, a front panel 2, a display screen 3, and a glass cover plate 4.

The middle frame 1 includes a first frame disposed at an upper edge of the terminal. The first frame is provided with a front panel 2. The front panel 2 can be any one or more of a camera component, a speaker component, a microphone component, a distance sensor, a signal light component, an infrared sensor, a structured light sensor, an ambient light sensor, and a fingerprint recognition component.

A glass cover plate 4 is disposed on the front side of the display screen. The glass cover plate 4 is transparent in the display area of the screen, and the edge positions outside the display area can be set to have different colors by means of painting or coating, so as to hidden the structures at the outer periphery edge of the display area. For example, as shown in Fig. 8, the distance sensor and the light sensor disposed between the first frame and the display screen have been covered by the glass cover plate 4, only the earpiece and the front-facing camera are visible. The front panel is disposed above the display area, and does not occupy the display area, and thus the display area displays a complete image.

The present disclosure has at least the following beneficial effects as compared with the related art.

With respect to the present disclosure, the notches are provided in the non-display area outside the display area according to the positions and the number of the front panels, and the front panels are disposed in the notches, which reduces the distance between the display module and the middle frame without affecting the display effect.

The number of the notches is set to be the same as the number of the front panels, and each of the notches is provided with one component, and each of the components is spaced apart from each other, which does not affect the functional effect of the front panels while reducing the influence of the opening on the display screen, so as to minimize the influence on the reliability of the display screen.

A plurality of components can be disposed within the notch, for example, the notch is set to be an elongated opening, and the adjacent plurality of front panels are disposed in the elongated notch, which can effectively reduce the manufacturing process, reduce the manufacturing difficulty, and improve the yield of the products.

The number of the notches can be set to be less than the number of the front panels. The components with a relatively close distance are disposed in one notch with a large opening, and the components with a relatively long distance are separately disposed in one notch. The plurality of notches is flexibly provided, which not only can reduce the influence of the opening on the display screen, but also simplify the manufacturing process as much as possible.

In the terminal, the middle frame of the device is fully utilized, and a groove corresponding to the notch is disposed on the middle frame, and the groove and the notch can enclose to form an accommodating space in which the front panel is fixed. With respect to this solution, on the one hand, a groove is disposed on the middle frame, which reduces the thickness of the middle frame, gives a certain space for the front panel component, and further shortens the distance between the display screen and the middle frame; and on the other hand, a groove matching with the appearance structure of the front panel is disposed on the middle frame, which can effectively fix the components and play the role of reinforcement.

Since the width of the non-display area of the display screen is narrow, if most of the non-display area is further cut off, the reliability of the display screen can be affected. Therefore, there is no design in the related art for improving the screen-to-body ratio by changing the non-display area. With respect to the present disclosure, a plurality of discontinuous notches is provided in the non-display area by means of laser cutting or grinding, which can not only give more space for the front panels, but also avoid the problem of reduced reliability of the display screen caused by large-area cutting.

The foregoing descriptions are only preferred embodiments of the present disclosure, and are not intended to limit the present disclosure. Within the principles of the disclosure, any modifications, equivalent substitutions, improvements, etc., are within the protection scope of the present disclosure.

## Claims

1. A mobile terminal, **characterized in that**, comprising: a middle frame (1), a display screen disposed on a front side of the middle frame (1), and a front panel (2) disposed on the middle frame; wherein
the display screen comprises a display area (210) and a non-display area (220), the display area (210) is provided with a plurality of display units arranged in an array, and the non-display area (220) surrounds the display area;
the non-display area (220) comprises a first edge region (221) adjacent to a first edge of the display area, the first edge region (221) is formed with a notch (230), and the depth of the notch is smaller than the width of the first edge region;
the middle frame (1) comprises a first frame (11) adjacent to the first edge region (221), the first frame (11) is provided with the front panel (2), and the front panel (2) is fully or partially embedded in the notch in a direction perpendicular to the first edge and parallel to the front side of the middle frame (1).

2. The mobile terminal according to claim 1, **characterized in that**, wherein the number of the notch is one or more (230), and each of the notches is embedded with at least one front panel (230).

3. The mobile terminal according to claim 2, **characterized in that**, wherein the number of the notch is one (230), and at least two front panels (2) are embedded in the notch (230).

4. The mobile terminal according to claim 2, **characterized in that**, wherein the number of the notch and the number of the front panel both are n (230) (2), and n is an integer greater than 1; and each of the notches (230) is embedded with one front panel.

5. The mobile terminal according to claim 2, **characterized in that**, wherein the number of the notches (230) is less than the number of the front panels (2); and wherein each of the notches is embedded with at least one front panel (230).

6. The mobile terminal according to any of claims 1 to 5, **characterized in that**, wherein the notch (230) is a semi-open notch.

7. The mobile terminal according to any of claims 1 to 5, **characterized in that**, wherein the notch (230) is a rectangular notch or an arcuate notch.

8. The mobile terminal according to any of claims 1 to 5, **characterized in that**, wherein the middle frame is provided with a groove (3) matching with the notch (230), and the notch (230) and the groove (3) enclose to form an accommodating space in which the front panel (2) can be embedded.

9. The mobile terminal according to any of claims 1 to 5, **characterized in that**, wherein the front panel (2) comprises at least one of a camera component, a speaker component, a microphone component, a distance sensor, a signal light component, an infrared sensor, a structured light sensor, an ambient light sensor, and a fingerprint recognition component.

10. A display module, **characterized in that**, comprising:
a display area (210) and a non-display area (220), wherein the display area (210) is provided with a plurality of display units arranged in an array, and the non-display area (220) surrounds the display area;
wherein the non-display area (220) comprises a first edge region (221) adjacent to a first edge of the display area (210), and the first edge region (221) is formed with a notch (230), and the depth of the notch (230) is smaller than the width of the first edge region (221).

11. The display module according to claim 10, **characterized in that**, wherein the number of the notch is one or more (230).

12. The display module according to claim 10, **characterized in that**, wherein the notch (230) is a rectangular notch or an arcuate notch.

13. The display module according to claim 10, **characterized in that**, wherein the notch (230) is located in the center of the first edge region (221).
